# EUROPEAN PATENT SPECIFICATION

(11) **EP 2 787 712 B1**
(45) Date of publication and mention of the grant of the patent: **20.07.2022**
(21) Application number: 14161710.0
(22) Date of filing: 26.03.2014
(51) Int. Cl.: H04L 67/306, H04L 67/12, H04L 67/54

(54) **Presence-aware information system**
Präsenzbewusstes Informationssystem
Système d'information sensible à la présence

(30) Priority: 01.04.2013 US 201313854611
(43) Date of publication of application: 08.10.2014
(73) Proprietor: Harman International Industries, Incorporated, Stamford, CT 06901 (US)
(72) Inventor: Chatterjee, Dibyendu, 560095 Bangalore (IN)
(74) Representative: Bertsch, Florian Oliver

(56) References cited:
- EP-A2- 2 287 728
- US-A1- 2010 042 235
- US-A1- 2012 169 583

## Description

### BACKGROUND OF THE INVENTION

### 1. Technical Field.

The present disclosure relates to presence-aware information systems.

### 2. Related Art.

Presence-aware information systems can include content delivery services and networks that provide electronic media based on identified end users. For example, a content delivery service may identify a user interacting with a computer and provide preferred content or a notification of the preferred content to the user based on stored information about the user. Also, for example, a content delivery service may identify the capabilities of the computer or a network associated with the computer and provide compatible content accordingly. US 2012/169583 A1 discloses a presence-aware system for content delivery.

### SUMMARY

The invention is defined by the independent claims.

A presence-aware information system (PAIS) can identify devices that are connected to the PAIS interacting with or nearby a user. Additionally, the PAIS can identify other people nearby the user. Using this information, the PAIS can act, such as to deliver content, accordingly. Also, in identifying the nearby devices, the PAIS can determine which of these devices to communicate with according to information associated with the user, the other people, and/or the devices, for example.

Other systems, methods, features and advantages will be, or will become, apparent to one with skill in the art upon examination of the following figures and detailed description. It is intended that all such additional systems, methods, features and advantages be included within this description, be within the scope of the PAIS, and be protected by the following claims.

### BRIEF DESCRIPTION OF THE DRAWINGS

The system, such as a presence-aware information system (PAIS), may be better understood with reference to the following drawings and description. The components in the figures are not necessarily to scale, emphasis instead being placed upon illustrating the principles of the PAIS. Moreover, in the figures, like referenced numerals designate corresponding parts throughout the different views.
Figure 1 illustrates a block diagram of an example network 100, which may include one or more aspects of an example PAIS.
Figure 2 illustrates a block diagram of an example electronic device 200, which may include one or more aspects of an example PAIS.
Figure 3 illustrates an operational flow diagram 300 that can be performed by one or more aspects of an example PAIS, such as the one or more aspects of the electronic device of Figure 2.
Figure 4 illustrates another operational flow diagram 400 that can be performed by one or more aspects of an example PAIS, such as the one or more aspects of the electronic device of Figure 2.

### DETAILED DESCRIPTION

It is to be understood that the following description of examples of implementations are given only for the purpose of illustration and are not to be taken in a limiting sense. The partitioning of examples in function blocks, modules or units illustrated in the drawings is not to be construed as indicating that these function blocks, modules or units are necessarily implemented as physically separate devices or a single physical device. Functional blocks, modules or units illustrated or described may be implemented as separate devices, circuits, chips, functions, modules, or circuit elements. One or more functional blocks, modules, or units may also be implemented in a common circuit, chip, circuit element or device.

A presence-aware information system (PAIS) can identify a user interacting with an end-user device, such as a computer, and can identify a device that is connected to the PAIS nearby the user. Additionally, the PAIS can identify the user and can identify other people nearby the user. Using such information, the PAIS can act, such as to provide content, accordingly.

Also, after identifying one or more devices that are connected to the PAIS that are nearby the user, the PAIS can determine which of these devices to communicate with according to information associated with the user, the other people, and/or the devices. For example, if a user is at a meeting having a conference room display connected to the PAIS, and the PAIS is triggered to send a message, such as a confidential message, to the user, the PAIS may direct the message to a personal mobile device of the user instead of the conference room display, depending on settings of the PAIS. If the message is not marked as confidential and may be appreciated by all the attendees of the meeting, the PAIS may direct the message to the conference room display or at least notify the attendees of a pending message via the display, depending on the settings of the PAIS. As discussed herein, there are many other possible applications of the PAIS.

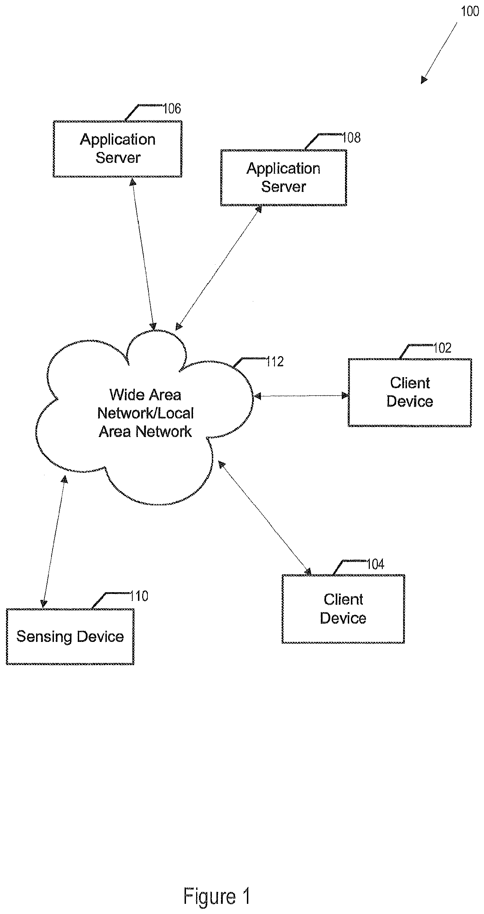

Figure 1 illustrates a block diagram of an example network 100, which may include one or more aspects of an example PAIS. The example PAIS may include one or more electronic devices, such as client devices 102 and 104 and application servers 106 and 108, and/or sensing devices, such as sensing device 110. Client devices, servers, and sensing devices of the PAIS may be communicatively coupled via a wide area network and/or a local area network, such as wide area network/local area network (WAN/LAN) 112. For the purpose of this disclosure, client devices may be considered end-user devices, and end-user devices may be considered client devices.

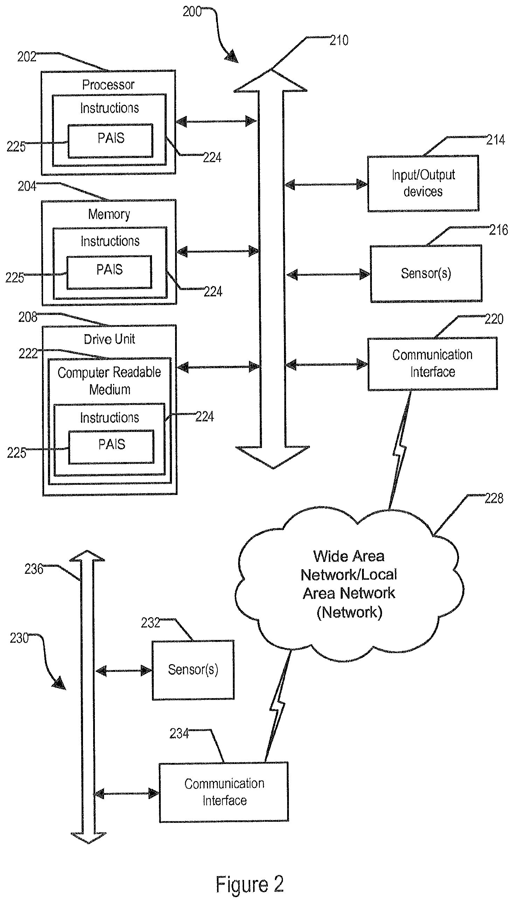

Figure 2 illustrates a block diagram of an example electronic device 200 and an example sensing device 230 that may be included in a PAIS. The electronic device 200 may be, include, and/or communicate with client devices and/or server computers, such as the client devices 102 and 104 and/or the application servers 106 and 108. The example sensing device 230 may be, include, and/or communicate with the sensing device 110, for example. A network 228 that communicatively couples the electronic device 200 and the sensing device 230 may be, include, and/or communicate with the WAN/LAN 112, for example.

The electronic device 200 and/or the sensing device 230 may include a set of instructions that can be executed to cause the electronic device 200 and/or the sensing device 230 to perform any of the methods and/or computer based functions described.

The electronic device 200 and/or the sensing device 230 may also include one or more processors or modules operable to perform any of the operations, methods and/or computer based functions disclosed herein. The electronic device 200 and/or the sensing device 230 may operate as a standalone device, may be included as functionality within a device also performing other functionality, or may be connected, such as using a network, to other computer systems and/or devices.

With respect to the electronic device 200, in the example of a networked deployment, the electronic device may operate in the capacity of a server, such as one or more of the application servers 106 and 108, and/or an end-user computer, such as one or more of the client devices 102 and 104. Additionally or alternatively, the electronic device 200 may operate within a client-server network environment, a peer-to-peer system, and/or a distributed network environment, for example. The electronic device 200 can host software or firmware for facilitating content aggregation from various content sources. Also, the electronic device 200 can host software or firmware for facilitating the control of distributing content from the various content sources based on information received regarding users and devices sensed and communicated from connected sensors and/or end-user electronic devices. The electronic device 200 can also be implemented as, or incorporated into, various end-user electronic devices, such as desktop and laptop computers, televisions, computerized appliances, furniture, and decorations such as electronic picture frames, hand-held devices such as smartphones and tablet computers, portable media devices such as recording, playing, and gaming devices, automotive electronics such as head units and navigation systems, or any machine capable of executing a set of instructions, sequential or otherwise, that result in actions to be taken by that machine. The electronic device 200 may be implemented using electronic devices that provide voice, audio, video and/or data communication. While a single device 200, such as an electronic device, is illustrated, the term "device" may include any collection of devices or sub-devices that individually or jointly execute a set, or multiple sets, of hardware and/or software instructions to perform one or more functions.

The one or more functions may include receiving information sensed by one or more sensors in an environment, the sensed information representing one or more attributes of the environment and one or more attributes of one or more people in the environment. The function(s) may also include identifying one or more particular people or types of people and the one or more attributes of the environment. Also, the function(s) may include retrieving one or more respective user profiles for the one or more identified people, and executing an action based on the one or more attributes of the environment and the one or more respective user profiles.

In addition, the one or more functions may include receiving sensed information, the sensed information can represent attributes of an environment, the attributes of the environment including one or more attributes of one or more people in the environment and of one or more devices in the environment. The function(s) may also include identifying one or more particular people or types of people in the environment and the one or more devices in the environment from the sensed information. Also, the function(s) may include retrieving one or more respective user profiles for the one or more identified people and retrieving one or more respective device profiles for the one or more identified devices. The function(s) may also include executing an action based on the one or more respective user profiles and the one or more respective device profiles.

The electronic device 200 may include a processor 202, such as a central processing unit (CPU), a graphics processing unit (GPU), or both. The processor 202 may be a component in a variety of systems. Also, the processor 202 may include one or more general processors, digital signal processors, application specific integrated circuits, field programmable gate arrays, servers, networks, digital circuits, analog circuits, combinations thereof, or other now known or later developed devices for analyzing and processing data. The processor 202 may implement a software program, such as code generated manually or programmed.

The electronic device 200 may include memory, such as a memory 204 that can communicate via a bus 210. The memory 204 may be or include a main memory, a static memory, or a dynamic memory. The memory 204 may include any non-transitory memory device. The memory 204 may also include computer readable storage media such as various types of volatile and non-volatile storage media including random access memory, read-only memory, programmable read-only memory, electrically programmable read-only memory, electrically erasable read-only memory, flash memory, a magnetic tape or disk, optical media and the like. Also, the memory may include a non-transitory tangible medium upon which software may be stored. The software may be electronically stored as an image or in another format, such as through an optical scan, then compiled, or interpreted or otherwise processed or executed.

In one example, the memory 204 may include a cache or random access memory for the processor 202. In alternative examples, the memory 204 may be separate from the processor 202, such as a cache memory of a processor, the system memory, or other memory. The memory 204 may be or include an external storage device or database for storing data. Examples include a hard drive, compact disc (CD), digital video disc (DVD), memory card, memory stick, floppy disc, universal serial bus (USB) memory device, or any other device operative to store data. For example, the electronic device 200 may also include a disk or optical drive unit 208. The drive unit 208 may include a computer-readable medium 222 in which one or more sets of software or instructions, such as the instructions 224, can be embedded. The processor 202 and the memory 204 may also include a computer-readable storage medium with instructions or software.

The memory 204 may be operable to store instructions executable by the processor 202. The functions, acts or tasks illustrated in the figures or described may be performed by the programmed processor 202 executing the instructions stored in the memory 204. The functions, acts or tasks may be independent of the particular type of instructions set, storage media, processor or processing strategy and may be performed by software, hardware, integrated circuits, firmware, microcode and the like, operating alone or in combination. Likewise, processing strategies may include multiprocessing, multitasking, parallel processing and the like.

The instructions 224 may include the methods and/or logic described herein, including aspects or modules of the electronic device 200 and/or an example PAIS, such as PAIS module 225. The instructions 224 may reside completely, or partially, in the memory 204 or in the processor 202 during execution by the electronic device 200. For example, software aspects or modules of the PAIS, such as the PAIS module 225, may include examples of various signal processors that may reside completely, or partially, in the memory 204 or in the processor 202 during execution by the electronic device 200.

With respect to various signal processors that may be used by the PAIS, hardware or software implementations of such processors may include analog and/or digital signal processing modules and analog-to-digital and/or digital-to-analog converters. The analog signal processing modules may include linear electronic circuits such as passive filters, active filters, additive mixers, integrators and delay lines. Analog processing modules may also include non-linear circuits such as compandors, multiplicators (frequency mixers and voltage-controlled amplifiers), voltage-controlled filters, voltage-controlled oscillators and phase-locked loops. The digital or discrete signal processing modules may include sample and hold circuits, analog time-division multiplexers, analog delay lines and analog feedback shift registers, for example. In other implementations, the digital signal processing modules may include ASICs, field-programmable gate arrays or specialized digital signal processors (DSP chips). Either way, such digital signal processing modules may enhance an image signal via arithmetical operations that include fixed-point and floating-point, real-valued and complex-valued, multiplication, and/or addition. Other operations may be supported by circular buffers and/or look-up tables. Such operations may include Fast Fourier transform (FFT), finite impulse response (FIR) filter, infinite impulse response (IIR) filter, and/or adaptive filters such as the Wiener and Kalman filters.

The modules described herein may include software, hardware, firmware, or some combination thereof executable by a processor, such as processor 202. Software modules may include instructions stored in memory, such as memory 204, or another memory device, that may be executable by the processor 202 or other processor. Hardware modules may include various devices, components, circuits, gates, circuit boards, and the like that may be executable, directed, or controlled for performance by the processor 202. The term "module" may include a plurality of executable modules.

Further, the electronic device 200 may include a computer-readable medium that may include the instructions 224 or receives and executes the instructions 224 responsive to a propagated signal so that a device connected to the network 228, such as the sensing device 230, can communicate voice, video, audio, images or any other data over the network 228 to the electronic device 200 and/or another electronic device. The instructions 224 may be transmitted or received over the network 228 via a communication port or interface 220, or using a bus 210. The communication port or interface 220 may be a part of the processor 202 or may be a separate component. The communication port or interface 220 may be created in software or may be a physical connection in hardware. The communication port or interface 220 may be configured to connect with the network 228, external media, one or more input/output devices 214, one or more sensors 216, or any other components in the electronic device 200, or combinations thereof. The connection with the network 228 may be a physical connection, such as a wired Ethernet connection or may be established wirelessly. The additional connections with other components of the electronic device 200 may be physical connections or may be established wirelessly. The network 228 may alternatively be directly connected to the bus 210.

The network 228 may include wired networks, wireless networks, Ethernet AVB networks, a CAN bus, a MOST bus, or combinations thereof. The wireless network may be or include a cellular telephone network, an 802.11, 802.16, 802.20, 802.1Q or WiMax network. The wireless network may also include a wireless LAN, implemented via WI-FI or BLUETOOTH technologies. Further, the network 228 may be or include a public network, such as the Internet, a private network, such as an intranet, or combinations thereof, and may utilize a variety of networking protocols now available or later developed including TCP/IP based at least networking protocols. One or more components of the electronic device 200 may communicate with each other by or through the network 228.

The one or more input/output devices 214 may be configured to allow a user to interact with any of the components of the electronic device. The one or more input/output devices 214 may include a keypad, a keyboard, a cursor control device, such as a mouse, or a joystick. Also, the one or more input/output devices 214 may include a microphone, one or more visual displays, speakers, remote controls, touchscreen displays or any other devices operative to interact with the electronic device 200, such as any device operative to act as an interface between the electronic device and one or more users and/or other electronic devices.

The one or more sensors 216 may be combined with or communicatively coupled, such as via the bus 210, with the one or more input/output devices 214. Operating in conjunction with the one or more input/output devices 214, the one or more sensors 216 may be configured to allow a user to interact with any of the components of the electronic device 200. Also, the one or more sensors 216 may be configured to sense people nearby the electronic device 200, for example. It should be noted that where the electronic device 200 is a server, it might not include the sensor(s) 216.

With respect to the sensing device 230, this device may include and/or communicate with one or more elements included in and/or communicatively coupled with the electronic device 200. Additionally, the sensing device 230 may include one or more sensors 232. The one or more sensors 232 may be combined or communicatively coupled with one or more input/output devices, such as input/output device(s) of the sensing device 230 and/or the one or more input/output devices 214. Operating in conjunction with the one or more input/output devices, the one or more sensors 232 may be configured to allow a user to interact with any of the components of the sensing device 230 and/or the electronic device 200. Also, the one or more sensors 232 may be configured to sense people nearby the sensing device 230 and/or the electronic device 200. Also, the sensing device 230 may include a communication port or interface 234 and a bus 236, such as a port or interface and a bus similar to the port or interface 220 and the bus 210. As depicted, the sensing device 230 and the electronic device 200 may communicate with each other over the network 228 via their respective communication ports or interfaces. Additionally or alternatively, the sensing device 230 may include any or all of the aspects and components of the electronic device 200, such as a processor and memory. The sensing device 230 may be a peripheral device that attaches to a structure or may be an embedded device. For example, in a vehicle, the sensing device 230 may be attached to various parts of a vehicle or embedded in parts of a vehicle. For example, the sensing device 230 may be embedded in a minor, dashboard, upholstery, or a window of a vehicle, for example. In a living space, the sensing device 230 may be attached or embedded in furniture or decor, for example.

The one or more sensors 216 and 232 may include one or more vibration, acoustic, chemical, electrical current, magnetic, radio, light, pressure, force, thermal, proximity, or biometric sensors. Functionally, the one or more sensors 216 and 232 may include one or more sensors that detect or measure, motion, temperature, magnetic fields, gravity, humidity, moisture, vibration, pressure, electrical fields, sound, or other physical aspects associated with a potential user or an environment hosting or proximate to the user. For example, a biometric sensor may include a device with voice, fingerprint, retinal, or facial recognition, for example.

In one example of the PAIS, sensors, such as the sensor(s) 216 and 232, can be triggered by motion or proximity sensors sensing presence of a person in an environment. Additionally or alternatively, sensors can be activated periodically. Periodic activation of sensors can be based on settings inputted by end users and administrators of the PAIS.

Regarding a sensed environment, the environment can include any building or outdoor space, room or area within a building or outdoor space, and/or determined zone. The space of a sensed environment may be determined by end users and administrators of the PAIS, and parameters regarding the space may be set and stored by storage aspects of the PAIS.

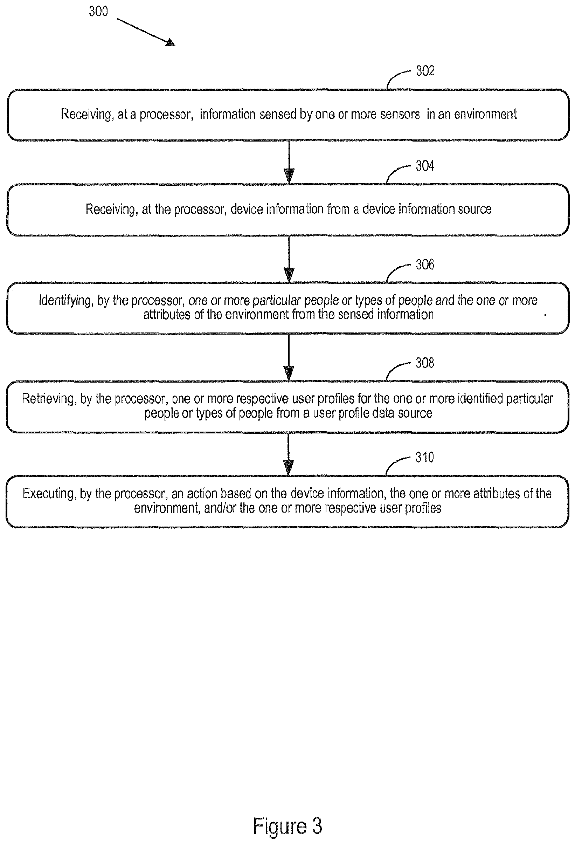

Figure 3 illustrates an example operational flow diagram 300 that can be performed by one or more aspects of an example electronic device of an example PAIS, such as the electronic device 200. The flow diagram 300 represents several sub-processes for providing presence awareness that can identify a user interacting with an end-user device and can identify any end-user device that is connected to the PAIS nearby the user. Additionally, the operation can identify the user and identify other people nearby the user, including other users serviced by the PAIS. Using this identifying information, the operation can act accordingly, such as provide content according to at least the identifications of people and devices.

In one example of the PAIS, a processor, such as the processor 202, can execute processing device readable instructions encoded in memory, such as the memory 204. In such an example, the instructions encoded in memory may include a software and/or hardware aspect of the PAIS, such as the PAIS module 125. The example operation of the PAIS may include receipt of one or more signals indicative of an event, such as a particular person entering a determined environment and/or interacting with an end-user device connected to the PAIS. A user interacting with the end-user device may include user input received in the form of one or more signals. The user input may include voice, touch, retinal movement, gestures, buttons, sliders, and/or the like. A user being present within an environment or at a location in the environment may be a type of user input. User presence may include being within a determined distance from one or more sensors, such as the one or more sensors 216 and 232. Also, user presence may include a user being at an outdoor area, in a zone of a building, and/or in a room of a building associated with an end-user device connected to and/or included with the PAIS.

At 302, the example operation may include receiving, at the processor, information sensed by one or more sensors, such as such as the one or more sensors 216 and 232, in an environment. The sensed information may represent one or more attributes of the environment and/or one or more attributes of one or more people in the environment.

Attributes of the environment may include a number of people associated or not associated with the PAIS, a number of end-user devices connected or not connected with the PAIS, or a number of any other types of object that may be within the environment. For example, in the case of a room, other objects may include furniture, fixtures, decorations, windows, and doors. These other objects may also be, include, or connect with an end-user device. Awareness of such attributes of the environment may be useful to the PAIS when analyzing a situation. For example, a number of people may indicate to the PAIS that there may be an event between contacts or coworkers that are connected with the PAIS, for example. Also, besides amounts of objects in an environment, a condition or status of one or more of those objects may be relevant, perceived, and captured by the one or more sensors. For example, wear and tear, configuration, and movement of objects may be captured by the sensor(s).

Regarding people and/or end-user devices that are associated with PAIS, such entities may become connected with the PAIS voluntarily, such as through online registration forms or broadcasted queries, or involuntarily, such as through market information gathering services that may include web crawlers or robots, for example. For example, users can register themselves or be registered by others, such as through social media. Also, end-users or administrators can register end-user devices. In registering devices with the PAIS, a device may be associated with one or more particular people or types of people, such as a member of the PAIS, a preferred member, a child, an adult, an employee of an organization, or a customer of a business, for example.

When others register a user for the PAIS, use of the user's information may require permission from the user. Also, when others register a user for the PAIS, the user may be required to permit his or her account with the PAIS. Once activated or at least permitted, a user's account may be integrated with various social media services, such as FACEBOOK, and personal information managers, such as OUTLOOK, for example.

Attributes of one or more people may include identifying attributes, such as facial recognition characteristics, anatomical recognition, or voice recognition. Other attributes may include size and shape of people, or electronic identifiers that may be attached or held by a person, such as radio-frequency identifications (RFIDs), wireless devices possessed by a person, or any other identifier. Individuals may also wear clothing or accessories with integrated codes that can identify the user and hold information regarding the user, such as matrix bar codes.

At 304, the example operation may include receiving, at the processor, device information from a device information source. The device information may include information associated with one or more end-user devices nearby the one or more people. Device information may include identification information for each of the one or more devices nearby the one or more people. Also, associated with the device identification information, respective device specifications may be included in the device information. Device specifications may include hardware, software, and/or firmware included in and/or connectable to a device, expected performance values of the device and/or the hardware, software, and/or firmware, and updates to the device and/or the hardware, software, and/or firmware. Also, device information may include device type and device status. Device information may also include user and/or group permissions per device. The device information may also include groups or one or more users associated with a device that can receive content from a determined content delivery system. Groups can be made of selected people, or by types of people, such as types categorized by employment status or demographics, for example. The device information may be received via a network, such as WAN/LAN 112, from a device information source. Such a source may be a remote server of or connected with the PAIS or may be an end-user device associated with the device information.

At 306, the example operation may include identifying, by the processor, one or more particular people or types of people and the one or more attributes of the environment from the sensed information. Individuals can be identified as members or non-members of the PAIS, for example. Individuals can also be identified as belonging to other categories besides membership status. For example, one or more specific people with user accounts can be identified and/or a number of adults and/or children can be identified.

Regarding identifying attributes of the environment, such attributes may include time and/or date and location of one or more of the one or more people, the one or more end-user devices, and the one or more other types of objects. Identification of environment attributes may also include identification of determined environment statuses, such as lights of a room are activated, doors are closed, and television monitors are activated, for example.

The identification of the one or more people and the one or more attributes of the environment may be taxing on the processor. To remedy such an issue, the processor may be one or more high-performance processors of one or more server computers, for example. Where such processing is not intensive, for example, when the system is set for reduced sensing, for example, the identifying of one or more particular people or types of people and environment attribute(s) may be done at an end-user device, such as a device nearby a user. Processing for identification can also be reduced by a computer that aggregates and deciphers trends in interactions between users and end-user devices.

At 308, the example operation may include retrieving, by the processor, one or more respective user profiles for the one or more identified people from a user profile data source. Not shown in Figure 3, device and environment profiles may also be retrieved by the processor, and may be used in determining actions.

Profiles, whether for a user, a device, or an environment, are communicated from one or more data sources, such as user profile databases, device profile databases, and environment profile databases. A data source may be one of the one or more devices associated with and/or nearby the one or more people. Also, a data source may include one or more databases of a content network or cloud computing service provider, for example. In some examples, a profile, such as for a user, device, or environment, may evolve, grow, or learn automatically from historical information regarding routines associated with a user, a device, and/or an environment. This can be done when the processor, for example, includes one or more processors associated with one or more servers, and these server(s) also include large storage capabilities, such as distributed storage capabilities. The learning can be simple to sophisticated, depending on user or administrative PAIS settings. For example, evolving profiles can evolve specifically for particular end-user devices of a house and particular residents of that house. This example is useful in a home to setup parental controls. A child profile can be set up that prevents age-inappropriate content from being displayed when a child of a certain age is in a room or region of the house. Also, the child's profile can change as the child ages, so content presented by a home device can change with respect to the child's age.

In examples where user, device, and/or environment profile information is extensive, users may control the distribution of such information. Control of profile information may be with respect various privacy and/or security levels. Also, the automated generation of such information may also be controlled by users through user settings of PAIS, for example.

Regarding user profiles, such profiles may include one or more of user preference information, user schedule information, and user status information, for example. User preference information may include prioritized methods of receiving content, prefer methods of receiving notices, frequency of receiving queued content, and types of actions to queue or immediately execute, for example. User schedule information may include time and/or date of meetings, appointments, events, tasks, such as prioritized tasks, and routines, for example. User status information may include group affiliation information, social connections, and user availability for message, call, chat, and/or other types of media, for example. User profiles can be populated by robots, crawlers, and/other types of automated processes, or by users and/or agents of the users, such as salespeople or customer support agents associated with the PAIS. The other types of profiles, such as device and environment profiles can also be populated by the same processes.

At 310, the example operation may include executing, by the processor, an action based on the device information, the one or more attributes of the environment, and/or the one or more respective user profiles. Such an action may include delivery of content including audio and/or visual content, such as streaming audio and/or video content, messaging, or email, to the one or more devices nearby the one or more users. The action may also include queuing and/or storing content at a content server or locally at an end-user device. A queue of content may be presented to a user as a prioritized list by a display of an end-user device, for example. From such a list, a user may interact with the queue. For example, the user may delete or move items on the queue.

Delivery of queued and/or stored content may be provided by a content aggregator. Such an aggregator, which may include a processor, such as the processor 202, may determine medium for dispatch of content. For example, the aggregator may determine to deliver content to a display viewable to any person in a room or to a personal mobile device of a particular user. Delivering content to an end-user device may be preceded by communication of a notification of the content. Such a notification of the content may be delayed or immediate.

In one example of the PAIS, in delivering content, the processor may determine how to deliver, when to deliver, and where to deliver content to people, based on matching information from the content provider, one or more user profiles of sensed people, one or more profiles of nearby device(s), and/or a profile of the environment that hosts the people and the device(s).

Also, the executed action may include determining status, such as permissions, of content and/or a part of content per user or group. Further, the action can include tagging the content and/or the part with the status. Status of content may include one or more of associated and/or permitted people or groups, priority of content, security level, and privacy level, for example.

Examples of the executed action may be numerous, and may be preset by developers of the PAIS or programmed by end users and administrators of the PAIS. Programming of the executed action may occur via any known programming language and/or by a scripting language specific to the PAIS. For example, actions can be programmed to include delivering content as audio if a user is driving a vehicle. The actions can also include delivering content to a personal device in the possession of the user if the content is sensitive in general or possibly offensive to people detected nearby the user. Also, actions can also include delivering a notification of a message in a corner of a display or interrupting content completely to display a notification. These actions can be controlled via scripts or user setting forms, for example. These scripts and forms can be associated with the various types of profiles, so that operations associated with the scripts and forms may be dynamic and evolving as profiles evolve.

When delivery of content or other actions are based on the sensed environment, people in the environment, and devices activated in the environment, the variations and options for control of actions based on this sensed information are numerous. Examples described herein merely illustrate a short list of the applications of the PAIS.

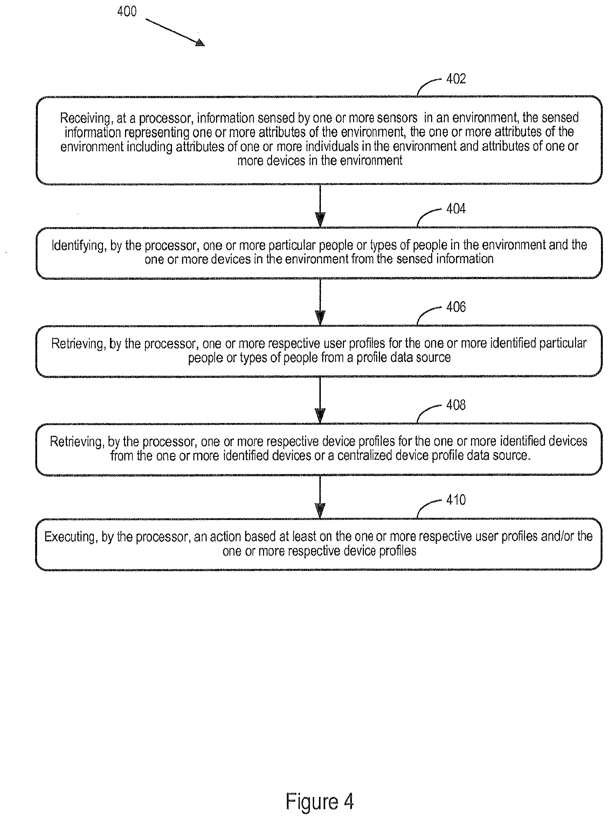

Figure 4 illustrates another example operational flow diagram 400 that can be performed by one or more aspects, such as a processor, of an example electronic device of an example PAIS. The flow diagram 400 represents several sub-processes for providing presence awareness that can identify a user interacting with an end-user device and can identify any device that is connected to the PAIS nearby the user. Additionally, the operation can identify the user and can identify other people nearby the user, including other users serviced by the PAIS. Using this information, the operation can act, such as provide content, accordingly.

At 402, the example operation may include receiving, at a processor, such as the processor 202, information sensed by one or more sensors, such as sensors 216 and 232, in an environment. The sensed information may represent attributes of the environment. The one or more attributes of the environment may include one or more attributes of one or more people in the environment and one or more attributes of one or more devices in the environment. In this operation, the attributes of the one or more devices are sensed. In the flow diagram 400, the attribute(s) of the device(s) may be sensed or predetermined. In an example where the device attribute(s) are stored without being sensed, the attribute(s) may be communicated to the processor as a result of a trigger, such as an individual entering the environment or interacting with a device in the environment, for example.

At 404, the example operation may include identifying, by the processor, one or more particular people or types of people in the environment and/or the one or more devices in the environment from the sensed information. At 406, the example operation may include retrieving, by the processor, one or more respective user profiles for the one or more identified people from a user profile data source. At 408, the example operation may include retrieving, by the processor, one or more respective device profiles for the one or more identified devices from the one or more identified devices or a centralized device profile data source. At 410, the example operation may include executing, by the processor, an action based at least on the one or more respective user profiles and/or the one or more respective device profiles.

While various embodiments of the PAIS have been described, it will be apparent to those of ordinary skill in the art that many more examples and implementations are possible within the scope of the PAIS. Accordingly, the system is not to be restricted except in light of the attached claims and their equivalents.

## Claims

1. A method for utilizing a presence awareness system, which is connected to several devices, comprising:
receiving, at a processor (202), information sensed in an environment by one or more sensors (232), the sensed information representing one or more attributes of the environment and one or more attributes of one or more people in the environment;
identifying, by the processor (202), one or more particular people or types of people from the sensed information;
retrieving, by the processor (202), one or more respective user profiles for the one or more identified particular people or types of people, and device information, the device information including one or more profiles associated with several devices nearby the one or more people and
executing, by the processor, an action based on the one or more attributes of the environment and the one or more respective user profiles, the action comprising selectively delivering content to a display from the several devices viewable to any person in a room or to a personal mobile device from the several devices, the personal mobile device or the display being determined based on matching information from a content provider providing the content, the one or more user profiles and the one or more profiles of nearby devices for dispatch of the content.

2. The method of claim 1, further comprising receiving, at the processor, the device information from a device information source.

3. The method of claim 2, further comprising receiving, at the processor, the device information, the device information including identification information of the several devices nearby the one or more people.

4. The method of any of the preceding claims, further comprising retrieving, by the processor, the one or more respective user profiles from a centralized user profile data source.

5. The method of claim 1, further comprising retrieving, by the processor, respective device profiles for the several devices.

6. The method of claim 5, wherein executing, by the processor, the action is further based on the one or more respective device profiles.

7. The method of claim 5, further comprising retrieving, by the processor, the one or more respective device profiles from the several devices.

8. The method of claim 5, further comprising retrieving, by the processor, the respective device profiles from a centralized device profile data source.

9. The method of claim 1, wherein the action includes determining status of the content and tagging the content with the status, the status including one or more of associated or permitted people or groups, priority of content, security level, and privacy level.

10. The method of claim 1, wherein selectively delivering content to a display comprises delivering the content to one display from a plurality of displays from the several devices.

11. A presence aware information system, comprising:
memory (204) including processor executable instructions;
an interface (220) configured to receive information sensed in an environment by one or more sensors (232), the sensed information representing one or more attributes of the environment and one or more attributes of one or more people in the environment; and
a processor (202) communicatively coupled to the memory and the interface (220), the processor configured to execute the instructions to:
identify one or more particular people or types of people from the sensed information, the one or more devices nearby the one or more people; and
retrieve one or more respective user profiles for the one or more identified particular people or types of people, and device information, the device information including one or more profiles associated with several devices nearby the one or more people and
execute an action based on the one or more attributes of the environment and the one or more identified types of people, the action comprising selectively delivering content to a display from the several devices viewable to any person in a room or to a personal mobile device from the several devices, the personal mobile device or the display being determined based on matching information from a content provider providing the content, the one or more user profiles and the one or more profiles of nearby devices for dispatch of the content.

12. The system of claim 11, where the processor (202) is further configured to execute the instructions to execute the action further based on the device information.

13. The system of claim 11 or 12, where the action comprises content delivery.

14. The system of any of claims 11 to 13, where the interface is further configured to receive the device information from a centralized device information source.

## Patentansprüche

1. Verfahren zur Benutzung eines Anwesenheitserkennungssystems, das mit mehreren Vorrichtungen verbunden ist, umfassend:
Empfangen von in einer Umgebung durch einen oder mehrere Sensoren (232) erfassten Informationen an einem Prozessor (202), wobei die erfassten Informationen ein oder mehrere Attribute der Umgebung und ein oder mehrere Attribute einer oder mehrerer Personen in der Umgebung darstellen;
Identifizieren einer oder mehrerer bestimmter Personen oder Arten von Personen aus den erfassten Informationen durch den Prozessor (202);
Abrufen von einem oder mehreren jeweiligen Benutzerprofilen für die eine oder mehreren identifizierten bestimmten Personen oder Arten von Personen und von Vorrichtungsinformationen durch den Prozessor (202), wobei die Vorrichtungsinformationen ein oder mehrere Profile beinhalten, die mehreren Vorrichtungen in der Nähe der einen oder mehreren Personen zugeordnet sind und Ausführen einer Aktion durch den Prozessor auf Grundlage des einen oder der mehreren Attribute der Umgebung und des einen oder der mehreren jeweiligen Benutzerprofile, wobei die Aktion selektives Liefern von Inhalten an eine Anzeige aus den mehreren Vorrichtungen, die für eine beliebige Person in einem Raum sichtbar ist, oder an eine persönliche mobile Vorrichtung aus den mehreren Vorrichtungen umfasst, wobei die persönliche mobile Vorrichtung oder die Anzeige auf Grundlage von übereinstimmenden Informationen von einem Inhaltsanbieter, der den Inhalt bereitstellt, dem einen oder den mehreren Benutzerprofilen und dem einen oder den mehreren Profilen von in der Nähe befindlichen Vorrichtungen zum Versenden des Inhalts bestimmt wird.

2. Verfahren nach Anspruch 1, ferner umfassend Empfangen der Vorrichtungsinformationen von einer Vorrichtungsinformationsquelle an dem Prozessor.

3. Verfahren nach Anspruch 2, ferner umfassend Empfangen der Vorrichtungsinformationen an dem Prozessor, wobei die Vorrichtungsinformationen Identifikationsinformationen der mehreren Vorrichtungen in der Nähe der einen oder mehreren Personen beinhalten.

4. Verfahren nach einem der vorangehenden Ansprüche, ferner umfassend Abrufen des einen oder der mehreren jeweiligen Benutzerprofile aus einer zentralisierten Benutzerprofildatenquelle durch den Prozessor.

5. Verfahren nach Anspruch 1, ferner umfassend Abrufen jeweiliger Vorrichtungsprofile für die mehreren Vorrichtungen durch den Prozessor.

6. Verfahren nach Anspruch 5, wobei das Ausführen der Aktion durch den Prozessor ferner auf dem einen oder den mehreren jeweiligen Vorrichtungsprofilen beruht.

7. Verfahren nach Anspruch 5, ferner umfassend Abrufen des einen oder der mehreren jeweiligen Vorrichtungsprofile aus den mehreren Vorrichtungen durch den Prozessor.

8. Verfahren nach Anspruch 5, ferner umfassend Abrufen der jeweiligen Vorrichtungsprofile aus einer zentralisierten Vorrichtungsprofildatenquelle durch den Prozessor.

9. Verfahren nach Anspruch 1, wobei die Aktion Bestimmen des Status des Inhalts und Kennzeichnen des Inhalts mit dem Status umfasst, wobei der Status eins oder mehrere von zugeordneten oder zugelassenen Personen oder Gruppen, Inhaltspriorität, Sicherheitsniveau und Datenschutzniveau beinhaltet.

10. Verfahren nach Anspruch 1, wobei das selektive Liefern von Inhalt an eine Anzeige Liefern des Inhalts an eine Anzeige aus einer Vielzahl von Anzeigen aus den mehreren Vorrichtungen umfasst.

11. Anwesenheitsbewusstes Informationssystem, umfassend:
Speicher (204) mit prozessorausführbaren Anweisungen;
eine Schnittstelle (220), die zum Empfangen von in einer Umgebung durch einen oder mehrere Sensoren (232) erfassten Informationen konfiguriert ist, wobei die erfassten Informationen ein oder mehrere Attribute der Umgebung und ein oder mehrere Attribute einer oder mehrerer Personen in der Umgebung darstellen; und
einen Prozessor (202), der kommunikativ mit dem Speicher und der Schnittstelle (220) gekoppelt ist, wobei der Prozessor dazu konfiguriert ist, die Anweisungen auszuführen zum:
Identifizieren einer oder mehrerer bestimmter Personen oder Arten von Personen anhand der erfassten Informationen, des einen oder der mehreren Vorrichtungen in der Nähe der einen oder mehreren Personen; und
Abrufen von einem oder mehreren jeweiligen Benutzerprofile für die eine oder mehreren identifizierten bestimmten Personen oder Arten von Personen und von Vorrichtungsinformationen, wobei die Vorrichtungsinformationen ein oder mehrere Profile beinhalten, die mehreren Vorrichtungen in der Nähe der einen oder mehreren Personen zugeordnet sind und
Ausführen einer Aktion auf Grundlage des einen oder der mehreren Attribute der Umgebung und der einen oder mehreren identifizierten Arten von Personen, wobei die Aktion selektives Liefern von Inhalten an eine Anzeige aus den mehreren Vorrichtungen, die für eine beliebige Person in einem Raum sichtbar ist, oder an eine persönliche mobile Vorrichtung aus den mehreren Vorrichtungen umfasst, wobei die persönliche mobile Vorrichtung oder die Anzeige auf Grundlage von übereinstimmenden Informationen von einem Inhaltsanbieter, der den Inhalt bereitstellt, dem einen oder den mehreren Benutzerprofilen und dem einen oder den mehreren Profilen von in der Nähe befindlichen Vorrichtungen zum Versenden des Inhalts bestimmt wird.

12. System nach Anspruch 11, wobei der Prozessor (202) ferner dazu konfiguriert ist, die Anweisungen zum Ausführen der Aktion ferner auf Grundlage der Vorrichtungsinformationen auszuführen.

13. System nach Anspruch 11 oder 12, wobei die Aktion Inhaltslieferung umfasst.

14. System nach einem der Ansprüche 11 bis 13, wobei die Schnittstelle ferner dazu konfiguriert ist, die Vorrichtungsinformationen von einer zentralisierten Vorrichtungsinformationsquelle zu empfangen.

## Revendications

1. Procédé d'utilisation d'un système de détection de présence, qui est connecté à plusieurs dispositifs, comprenant :
la réception, au niveau d'un processeur (202), d'informations détectées dans un environnement par un ou plusieurs capteurs (232), les informations détectées représentant un ou plusieurs attributs de l'environnement et un ou plusieurs attributs d'une ou de plusieurs personnes dans l'environnement ;
l'identification, par le processeur (202), d'une ou de plusieurs personnes ou types de personnes particuliers à partir des informations détectées ;
la récupération, par le processeur (202), d'un ou de plusieurs profils d'utilisateur respectifs pour les une ou plusieurs personnes ou types de personnes particuliers identifiés, et des informations de dispositif, les informations de dispositif comportant un ou plusieurs profils associés à plusieurs dispositifs à proximité des une ou plusieurs personnes et
l'exécution, par le processeur, d'une action sur la base des un ou plusieurs attributs de l'environnement et des un ou plusieurs profils d'utilisateur respectifs, l'action comprenant la fourniture sélective de contenu à un affichage à partir des plusieurs dispositifs visibles par toute personne dans une pièce ou à un dispositif mobile personnel à partir des plusieurs dispositifs, le dispositif mobile personnel ou l'affichage étant déterminé sur la base d'informations de correspondance provenant d'un fournisseur de contenu fournissant le contenu, des un ou plusieurs profils d'utilisateur et des un ou plusieurs profils de dispositifs à proximité pour l'envoi du contenu.

2. Procédé selon la revendication 1, comprenant en outre la réception, au niveau du processeur, des informations de dispositif à partir d'une source d'informations de dispositif.

3. Procédé selon la revendication 2, comprenant en outre la réception, au niveau du processeur, des informations de dispositif, les informations de dispositif comportant des informations d'identification des plusieurs dispositifs à proximité des une ou plusieurs personnes.

4. Procédé selon l'une quelconque des revendications précédentes, comprenant en outre la récupération, par le processeur, des un ou plusieurs profils d'utilisateur respectifs à partir d'une source de données de profil d'utilisateur centralisée.

5. Procédé selon la revendication 1, comprenant en outre la récupération, par le processeur, de profils de dispositif respectifs pour les plusieurs dispositifs.

6. Procédé selon la revendication 5, dans lequel l'exécution, par le processeur, de l'action est en outre basée sur les un ou plusieurs profils de dispositif respectifs.

7. Procédé selon la revendication 5, comprenant en outre la récupération, par le processeur, des un ou plusieurs profils de dispositif respectifs à partir des plusieurs dispositifs.

8. Procédé selon la revendication 5, comprenant en outre la récupération, par le processeur, des profils de dispositif respectifs à partir d'une source de données de profil de dispositif centralisée.

9. Procédé selon la revendication 1, dans lequel l'action comporte la détermination de l'état du contenu et l'étiquetage du contenu avec l'état, l'état comportant une ou plusieurs personnes ou groupes associés ou autorisés, la priorité du contenu, le niveau de sécurité et le niveau de confidentialité.

10. Procédé selon la revendication 1, dans lequel la fourniture sélective de contenu à un affichage comprend la fourniture du contenu à un affichage à partir d'une pluralité d'affichages à partir des plusieurs dispositifs.

11. Système d'information sensible à la présence, comprenant :
une mémoire (204) comportant des instructions exécutables par le processeur ;
une interface (220) configurée pour recevoir des informations détectées dans un environnement par un ou plusieurs capteurs (232), les informations détectées représentant un ou plusieurs attributs de l'environnement et un ou plusieurs attributs d'une ou de plusieurs personnes dans l'environnement ; et
un processeur (202) couplé en communication à la mémoire et à l'interface (220), le processeur étant configuré pour exécuter les instructions pour :
identifier une ou plusieurs personnes ou types de personnes particuliers à partir des informations détectées, les un ou plusieurs dispositifs se trouvant à proximité des une ou plusieurs personnes ; et
récupérer un ou plusieurs profils d'utilisateur respectifs pour les une ou plusieurs personnes ou types de personnes particuliers identifiés, et des informations de dispositif, les informations de dispositif comportant un ou plusieurs profils associés à plusieurs dispositifs à proximité des une ou plusieurs personnes et
exécuter une action sur la base des un ou plusieurs attributs de l'environnement et des un ou plusieurs types de personnes identifiés, l'action comprenant la fourniture sélective de contenu à un affichage à partir des plusieurs dispositifs visibles par toute personne dans une pièce ou à un dispositif mobile personnel à partir des plusieurs dispositifs, le dispositif mobile personnel ou l'affichage étant déterminé sur la base d'informations de correspondance provenant d'un fournisseur de contenu fournissant le contenu, des un ou plusieurs profils d'utilisateur et des un ou plusieurs profils de dispositifs à proximité pour l'envoi du contenu.

12. Système selon la revendication 11, où le processeur (202) est en outre configuré pour exécuter les instructions pour exécuter l'action en outre sur la base des informations de dispositif.

13. Système selon la revendication 11 ou 12, où l'action comprend la fourniture de contenu.

14. Système selon l'une quelconque des revendications 11 à 13, où l'interface est en outre configurée pour recevoir les informations de dispositif à partir d'une source d'informations de dispositif centralisée.
